# EUROPEAN PATENT APPLICATION

(11) **EP 1 717 138 A1**
(43) Date of publication of application: **02.11.2006**
(21) Application number: 06380086.6
(22) Date of filing: 17.04.2006
(51) Int. Cl.: B62K 5/08, B62M 23/02

(54) **Four-wheeled family bicycle**

(30) Priority: 28.04.2005 ES 200500958 U
(71) Applicant: Modesto, Calet Garcia, 04745 La Mojonera (Almeria) (ES)
(72) Inventor: Modesto, Calet Garcia, 04745 La Mojonera (Almeria) (ES)
(74) Representative: Carpintero Lopez, Francisco

(57) **Abstract**

Four-wheeled family bicycle, wherein under the seat (13) for adults a battery (12) has been foreseen connected with a motor (11) to transmit its movement, through the opportune transmission arrangement, to the rear wheels (3), allowing that once pedalling has commenced said motor (11) is put into operation and moves the bicycle with its load, the pedalling being maintained with a minimum effort; it having additionally been foreseen that in correspondence with the front part there is a seat (23) for children with side and front protectors, as well as a safety belt, and in front of them some toy or recreational steering wheels (24) for the children to play with.

## Description

### OBJECT OF THE INVENTION

The present invention refers to a four-wheeled family bicycle, the evident purpose of which is that of constituting a means of leisure, recreation and amusement for several adults and two children, the bicycle also having, with the pertinent pedals and steering wheels, a motor which transmits movement to the rear wheels, during the corresponding pedalling of the bicycle itself, achieving with this that the effort of the persons who are pedalling is minimum, since the force, while the pedalling is being carried out, is applied by the motor.

### BACKGROUND OF THE INVENTION

Although four-wheeled bicycles are known, the constitution thereof is such that the operational possibilities and performance that they can provide are very limited, since in most of the cases they have two or four seats for adults or children, with brakes and a steering wheel or handlebar for guidance, the combination not existing of those items with a starter motor, with batteries for feeding the motor, solar panels, or other means that allow a practically autonomous operation of the bicycle to avoid the users having to apply the least effort.

### DESCRIPTION OF THE INVENTION

The four-wheeled bicycle disclosed, is built from a structure based on bars or tubular elements of reduced thickness, in which two front forks are established in which respective wheels are mounted, and two rear forks in which the back wheels are mounted, there being a seat above those rear wheels for two adults, as well as two sets of pedals with the corresponding transmission chains to those rear wheels, in combination with a motor located in the rear part at least one rechargeable battery, with the complement that the roof of the bicycle, instead of being conventional, includes some solar panels by means of which the adequate electricity is obtained to feed the battery and thereby the operation of the motor, the front part having two steering wheels or handlebars (the left one operational and the right one free-wheeling), a hand brake which acts on the back wheels and a foot brake for the front wheels, and in front of those steering wheels, at a lower level, a seat for two children in front of which other two steering wheels are located that are not operational but which allow the children located in those front seats to pretend they are driving the vehicle.

The hand brake, located in the front part under the steering wheels or handlebars for guidance and mounted between them, is connected with a transmission arrangement through which it acts on the rear wheels.

Therefore, it is a four-wheeled bicycle with the pedalling assisted by an electric motor which draws energy from some batteries located under the actual rear seat for adults, which battery or batteries are charged with the solar panel located on the roof of the bicycle, which in turn acts as a sunshade for the occupants of the same, it being possible to charge said battery or batteries simultaneously through the electric network with transformer. On the front part there is a control panel where an ignition key, an emergency button, a safety fuse, a converter and an indicator of battery charge, consumption and safety disconnection have been fitted, whilst in the rear part there is a small computer for control of the power, the speed and to regulate the start-up.

On starting to pedal the bicycle, once the ignition has been switched on, the motor comes into operation automatically, moving practically by itself all the weight of the bicycle and its occupants, no more than pedalling without any type of effort being required for the motor to continue working.

However, if pedalling stops, a sensor provided for the purpose will disable the corresponding electric system, the motor ceasing to work, it being necessary to resume pedalling for the sensor to activate the electric system again and the motor to begin transmitting the movement to the wheels through the corresponding transmission.

The bicycle, logically depending on the power of the motor, will be able to reach more or less speed, it being considered that it will be able to reach 25 km/h, regulated by a potentiometer fitted in the computer, including an autonomy which under normal conditions can be up to 60 km minimum, it even being possible to climb slopes of up to 10% in full load.

Consequently, it is a family bicycle that can be ridden for leisure and recreation, an amusement for the occupants, or in other words for families with children, and this being achieved without any type of effort, since it is sufficient to work the pedals which, when the motor comes into operation, require no effort whatever to move them.

Finally, it is pointed out that the front seats for the children will include the opportune safety belts, as well as front and side arrangements for protection to prevent the children from falling out, allowing them to be entertained and to play during the trip by having steering wheels or handlebars mounted in front of said front seat for children.

### DESCRIPTION OF THE DRAWINGS

To complete the description that is being made and with the object of assisting in a better understanding of the characteristics of the invention, in accordance with a preferred example of practical embodiment of the same, the description is accompanied with a set of drawings as an integral part thereof, wherein by way of illustration and not restrictively, the following has been represented:

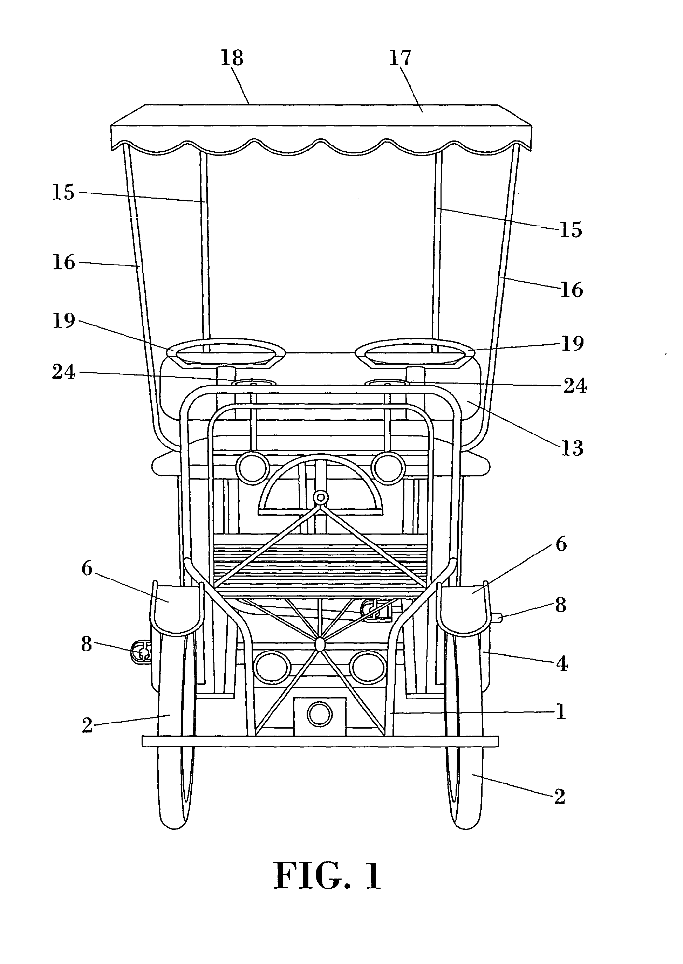

Figure 1. - It shows a representation according to a front perspective of the bicycle embodied in accordance with the object of the invention.

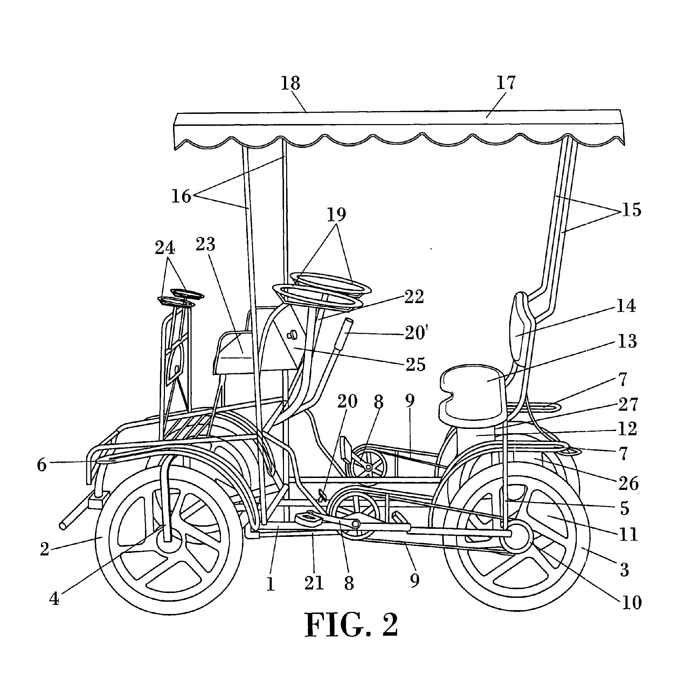

Figure 2. - It shows another view in perspective, in this case from the side, of the same bicycle.

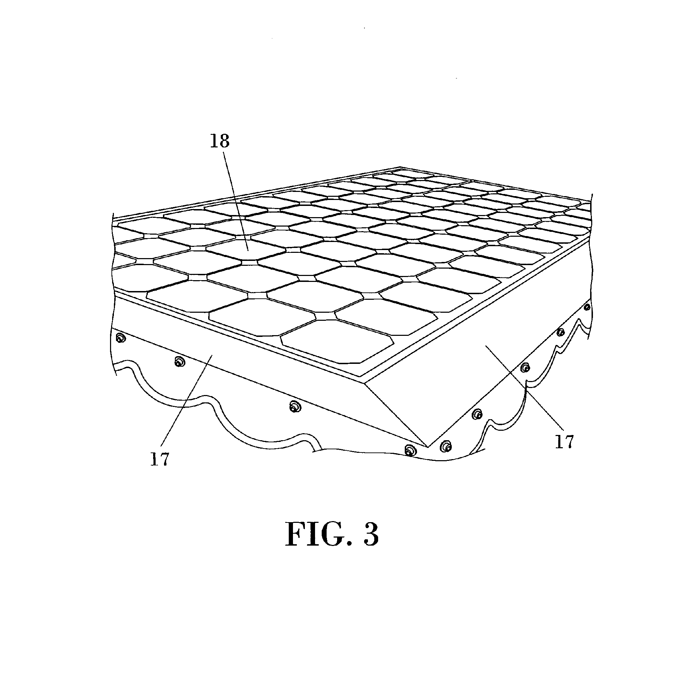

Figure 3. - It shows a detail of the solar panel which is part of the roof of the bicycle.

### PREFERRED EMBODIMENT OF THE INVENTION

In the light of the aforesaid figures it can be observed how the bicycle of the invention is constituted from a general structure or frame (1) based on tubular elements or bars suitably joined to form that general frame or structure of the bicycle, which has a pair of wheels (2) in its front part and a pair of rear wheels (3) in the rear part, being mounted in the respective forks (4) and (5) established for this purpose in correspondence with each of said front wheels (2) and back wheels (3).

It is also foreseen that such wheels are supplemented with mudguards (6) and (7), including between the two wheels the corresponding sets of pedals (8) which, through a chain transmission (9) reach the sprocket wheels (10) foreseen on the rear wheels (3), a motor (11) being included in this rear part of the bicycle, as well as a battery (12) located under a twin seat (13) for adults located above the back wheels (3) and properly fitted on the rear part of the bicycle, which seat (13) is supplemented with a backrest (14) from which some bars or tubes (15) emerge which together with others (16) at the front support the roof (17), which is supplemented on top with a solar panel (18) which, through the corresponding electrical circuitry, allows the battery (12) to be fed which delivers power to the motor (11).

In correspondence with the front part the steering wheels (19) (left operational and the right free-wheeling) have been foreseen, for steering or guiding the bicycle, a foot brake (20) which acts on the front wheels, as well as a hand brake (20') connected with a transmission (21) for the application from the system to the wheels, it having been foreseen that from the steering wheel (19) there extends the corresponding steering rod (22) connected, logically, with the axle of the front wheels (2).

In front of the steering wheel (19) and at a lower level than the same, a seat (23) has been foreseen for children, with safety harness and protectors both in front and at the side, and before that seat (23) individual steering wheels (24) for the entertainment of the children that are seated in the aforementioned seat (23).

The bicycle so constituted is supplemented with a control panel (25) with an ignition key, an emergency button, a safety fuse and a converter indicator of battery charge, consumption and safety disconnection, whilst in the rear part a computer (26) has been foreseen for control of speed, power and for regulation when starting, having also an enclosure (27) in correspondence with the rear part, to protect the battery or batteries (12) and the motor (11). Clearly, the bicycle so constituted will have the pertinent electrical circuitry not only for feeding the battery from the solar panel (18) but also for the transmission of energy from said battery (12) to the motor (11), as well as for feeding pilot lamps and signalling lights with which the bicycle will usually be equipped, included the power supply for the regulator of speed, power, regulator for ignition, and starting the motor, etc., that is, it will have all the electrical circuitry to allow the correct operation of the bicycle as a whole.

## Claims

1. Four-wheeled family bicycle, which being constituted from a general structure or chassis, being driven through corresponding sets of pedals, with chain transmission to the sprocket wheels of the same, and having a rear seat for adults, a steering wheel or handlebar for guidance, independent hand and foot brake, is **characterized in that** in correspondence with the rear part and under the seat for adults a battery has been foreseen connected with a motor to transmit its movement, through the opportune transmission arrangement, to the rear wheels, allowing that once pedalling has commenced said motor is put into operation and moves the bicycle with its load, the pedalling being maintained with a minimum effort; it having additionally been foreseen that in correspondence with the front part there is a seat for children with side and front protectors, as well as a safety belt, and in front of them some toy or recreational steering wheels for the children to play with.

2. Four-wheeled family bicycle, according to claim 1, **characterized in that** from the general structure or chassis of the bicycle some bars or tubes emerge upwards which support the corresponding roof on which are mounted some solar panels for feeding the battery or batteries which the bicycle incorporates.

3. Four-wheeled family bicycle, according to preceding claims, **characterized in that** the front part includes a control panel with ignition key, emergency button, safety fuse and converter and indicator of battery charge, consumption and safety disconnection, whilst in the rear part there is a computer for control of speed, of power and for regulation of the corresponding start-up.
